(19) Europäisches Patentamt
European Patent Office
Office européen des brevets

(11) Veröffentlichungsnummer : **0 027 944**
**B1**

(12) # EUROPÄISCHE PATENTSCHRIFT

(45) Veröffentlichungstag der Patentschrift : **05.06.85**

(51) Int. Cl.⁴ : **C 08 G 69/44**, C 09 J 3/16

(21) Anmeldenummer : **80106207.6**

(22) Anmeldetag : **11.10.80**

(54) **Schmelzkleber auf Basis von Polyesteramiden und deren Verwendung zum Verkleben von organischen und anorganischen Substraten.**

(30) Priorität : **23.10.79 DE 2942680**

(43) Veröffentlichungstag der Anmeldung : **06.05.81 Patentblatt 81/18**

(45) Bekanntmachung des Hinweises auf die Patenterteilung : **05.06.85 Patentblatt 85/23**

(84) Benannte Vertragsstaaten :
**AT BE DE FR GB IT LU NL SE**

(56) Entgegenhaltungen :
**DE-A- 2 534 845**
**FR-A- 1 359 955**
**FR-E- 52 850**
**GB-A- 1 216 230**
**US-A- 2 379 413**
**US-A- 2 653 880**
**US-A- 3 447 999**
**Die Akte enthält technische Angaben, die nach dem Eingang der Anmeldung eingereicht wurden und die nicht in dieser Patentschrift enthalten sind.**

(73) Patentinhaber : **SCHERING AKTIENGESELLSCHAFT**
**Berlin und Bergkamen**
**Waldstrasse 14 Postfach 15 40**
**D-4709 Bergkamen (DE)**

(72) Erfinder : **Bolze, Manfred**
**Rotherbachstrasse 39 b**
**D-4619 Bergkamen-Oberaden (DE)**
Erfinder : **Drawert, Manfred, Dr. Dipl.-Chem.**
**Alte Kreisstrasse 13**
**D-5758 Fröndenberg-Strickherdicke (DE)**

**EP 0 027 944 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Bei der Verarbeitung von Schmelzklebstoffen ist die Erstarrungsgeschwindigkeit bzw. die offene Zeit ein wesentliches Kriterium. Die handelsüblichen Schmelzkleber auf der Basis von dimerisierter Fettsäure, z. B. entsprechende Polyamide oder dimerfettsäurefreie Polyester wie beispielsweise Polyäthylenterephthalat, binden bei auf Raumtemperatur befindlichen Substraten aus der Schmelze in etwa 1-2 Sekunden ab. Diese äußerst geringe Zeitspanne kann durch eine möglichst hohe Temperatur der Schmelze — was sich bei wärmeempfindlichen Substraten verbietet — oder durch Vorwärmung des Substrates nur geringfügig erhöht werden.

Besonders schnell binden Schmelzkleber mit hohen Erweichungspunkten ab.

Müssen nun großflächige Substrate mit Schmelzklebstoff beschichtet werden oder weist das zu verklebende Substrat eine hohe Wärmeleitfähigkeit (z. B. Metalle) auf, so führt ein zu schnelles Abbinden des Klebstoffes zu mangelhaften bzw. völlig unbrauchbaren Verklebungen.

Oft ist infolge ungenauer Ausrichtung der zu verklebenden Teile ein Nachrichten der gerade verklebten Teile erforderlich. Dieses ist bei zu schnell abbindenden Schmelzklebstoffen nicht mehr möglich.

Bei der Verklebung von Metallen mit den zum Stand der Technik gehörenden Schmelzklebern ist zur Erzielung optimaler Werte eine Vorwärmung erforderlich, um eine gute Benetzung des Metalles durch den Klebstoff zu bewirken. Es muß also ein zusätzlicher Arbeitsgang durchgeführt werden.

In der US-PS 2 653 880 werden Klebstoffe beschrieben, die Kondensationsprodukte von Monoethanolamin, Ethylendiamin, Sebazinsäure, und dimeren Fettsäuren sind, jedoch ohne Mitverwendung von Caprolactam hergestellt werden und welche durch Erwärmen in einen plastischen Zustand überführt werden und dann eine Oberflächenklebrigkeit aufweisen. Die Erhaltung der Oberflächenklebrigkeit (offene Zeit) kann durch den Gehalt an dimeren Fettsäuren bis zu einem gewissen Grad gesteuert werden. Dabei muß jedoch bei längeren offenen Zeiten eine Verschlechterung der Klebwerte in Kauf genommen werden. Weiterhin ist eine Nachrichtung von großflächigen Klebeteilen, insbesondere bei Substraten mit hoher Wärmeleitfähigkeit, kaum noch möglich.

Der Erfindung liegt die Aufgabe zugrunde, die Nachteile des Standes der Technik zu überwinden und Schmelzkleber auf Basis dimerer Fettsäure zu finden, die neben den bekannten guten Eigenschaften, wie hohe Flexibilität und Klebkraft, niedrigere Erstarrungsgeschwindigkeiten, also lange offene Zeiten zeigen, wobei die zuletzt genannte Eigenschaft auch von Schmelzklebern mit hohen Erweichungspunkten erbracht werden soll.

Diese Aufgabe wird erfindungsgemäß gelöst durch Schmelzkleber auf Basis von Polyesteramiden mit niedriger Erstarrungsgeschwindigkeit, bestehend aus

A) dimerisierten Fettsäuren mit 16-44 Kohlenstoffatomen, gegebenenfalls in Mischung mit Monocarbonsäuren, und

B) Caprolaktam und/oder 6-Aminocapronsäure, wobei pro Mol Carboxylgruppen der Komponente A 0,25-5,0 Mol der Komponente B eingesetzt werden, und

C) Monoalkanolaminen der allgemeinen Formel

$$HO—R—NH_2$$

worin R ein aliphatischer, gegebenenfalls verzweigter oder durch Sauerstoffatome unterbrochener Kohlenwasserstoffrest mit 2-8 Kohlenstoffatomen sein kann und

D) diprimären und/oder disekundären und/oder primär-sekundären Diaminen, wobei das Äquivalenzverhältnis von C : D zwischen 0,1 : 0,9 und 0,9 : 0,1, insbesondere zwischen 0,3 : 0,7 bis 0,7 : 0,3, liegt.

Ein weiterer Gegenstand der Erfindung ist die Verwendung der Polyesteramide als Schmelzkleber für die Verklebung von organischen und anorganischen Substraten.

Die Summe der molaren Äquivalente der zur Anwendung kommenden Amin- und Hydroxylgruppen der Komponenten C und D ist praktisch gleich den molaren Äquivalenten der Carboxylgruppen der Komponente A.

Die Kondensation der beschriebenen Komponenten zu den erfindungsgemäßen Polyesteramiden erfolgt bei Temperaturen zwischen 200 und 300 °C in der üblichen Weise.

Der Ausdruck dimerisierte Fettsäure bezieht sich in allgemeiner Form auf polymerisierte Säuren, die aus « Fettsäuren » erhalten werden. Der Ausdruck « Fettsäure » umfaßt ungesättigte natürliche und synthetische einbasische aliphatische Säuren mit 8 bis 22 Kohlenstoffatomen, bevorzugt 18 Kohlenstoffatomen. Diese Fettsäuren lassen sich nach bekannten Verfahren polymerisieren (vgl. DE-OS 1 443 938, DE-OS 1 443 968, DE-PS 2 118 702 und DE-PS 1 280 852).

Typische im Handel erhältliche polymere Fettsäuren haben etwa folgende Zusammensetzung :

| | |
|---|---|
| monomere Säuren | (Mo) 5 bis 15 Gew.-% |
| dimere Säuren | (Di) 60 bis 80 Gew.-% |
| trimere Säuren | (Tri) 10 bis 35 Gew.-%. |

Der Gehalt an dimerer Säure kann durch allgemein bekannte Destillationsverfahren bis zu 100 Gew.-% erhöht werden.

Die eingesetzte dimere Fettsäure kann auch in hydrierter Form vorliegen.

Bei Verwendung von destillierter dimerer Fettsäure werden Schmelzkleber mit verbesserter Farbzahl erhalten. Andererseits ist die Verwendung von handelsüblicher technischer polymerisierter Fettsäure zur Herstellung von Schmelzklebern für besondere Zwecke möglich. Bei der Verwendung von technischer dimerer Fettsäure sei nur darauf hingewiesen, daß der Gehalt an trimerer Fettsäure eine maximale Grenze nicht überschreiten sollte. Dieser Grenzwert hängt von dem jeweiligen Gehalt an dimerer und monomerer Fettsäure der polymerisierten Fettsäure ab und kann durch einen orientierenden Versuch, wie er zur handwerklichen Alltagsroutine des Durchschnittsfachmanns gehört, festgestellt werden.

Bevorzugt wird jedoch destillierte dimere Fettsäure mit einem Gehalt an dimerer Fettsäure von 80-96 % verwendet.

Der gegebenenfalls bereits vorhandene Anteil an Monocarbonsäuren in der dimerisierten Fettsäure kann zur Einstellung eines gewünschten Molekulargewichtes durch Zusatz weiterer Monocarbonsäuren nocht erhöht werden. Die Höhe dieses Anteils ist abhängig vom gewünschten Molekulargewicht des Endproduktes, dem Verhältnis der am Aufbau des Polymermoleküls beteiligten Komponenten und der Zusammensetzung der verwendeten dimerisierten Fettsäure. Im allgemeinen reicht ein zusätzlicher Anteil von 15 Mol-%, bezogen auf die dimerisierte Fettsäure bzw. das Fettsäuregemisch, zur Einstellung des gewünschten Molekulargewichtes aus.

Als erfindungsgemäß mitverwendbare Monocarbonsäuren kommen insbesondere gradkettige oder verzweigte, gesättigte oder ungesättigte Monocarbonsäuren mit 12-22 Kohlenstoffatomen in Betracht, wie z. B. Laurinsäure, Palmitinsäure, Palmitoleinsäure, Erucasäure. Erfindungsgemäß bevorzugt werden die $C_{18}$-Monocarbonsäuren wie Stearinsäure, Ölsäure, Linolsäure, Linolensäure und die natürlichen Fettsäuregemische wie z. B. Tallölfettsäure oder Sojaölfettsäure.

Die Monocarbonsäuren können entweder einzeln oder als Mischung eingesetzt werden.

Falls für besondere Anwendungsgebiete erforderlich, ist auch die Verwendung bzw. die Mitverwendung von Monocarbonsäuren mit weniger als 12 Kohlenstoffatomen möglich.

Neben der dimeren Fettsäure wird Caprolaktam bzw. die 6-Amino-capronsäure eingesetzt. Höhere Laktame führen im Sinne der Erfindung zu unbrauchbaren Produkten.

Das nach der Reaktion sich im Gleichgewicht mit dem polymeren Kondensationsprodukt befindliche monomere Caprolaktam wird nach der Kondensation bis zu einer Sumpftemperatur von max. 250 °C bei ca. 20 mbar abdestilliert.

Das Verhältnis von A : B wird im wesentlichen durch den gewünschten Erweichungspunkt bzw. die gewünschte Wärmestandfestigkeit sowie die gewünschte Abbindezeit bestimmt. Die erfindungsgemäß bevorzugten Produkte weisen Ring und Ball Erweichungspunkte von 100 °C-200 °C und Abbindegeschwindigkeiten von mehr als 4 Sekunden auf, gemessen an Noratest ®-Gummi bei Raumtemperatur. Zur Erzielung dieser Werte werden pro Mol Carboxylgruppen der dimeren Fettsäure und der gegebenenfalls mitverwendeten Monocarbonsäure (Komponente A) 0,25 bis 5,0 Mol, insbesondere 1 bis 3 Mol, Caprolaktam bzw. 6-Amino-capronsäure eingesetzt.

Die zur Anwendung kommenden Alkanolamine werden von der allgemeinen Formel $HO—R—NH_2$ umfaßt, worin R ein aliphatischer, gegebenenfalls auch verzweigter oder durch Sauerstoffatome unterbrochener Kohlenwasserstoffrest mit 2-8 C-Atomen sein kann.

Als Beispiele seien genannt : n-Propanolamin, Butanolamin, 2-Amino-4-pentanol, 2-Amino-3-hexanol, 5-Amino-4-octanol, 3-Amino-3-methyl-2-Butanol und insbesondere Monoäthanolamin, Isopropanolamin, Neopentanolamin und Diglykolamin.

Die aufgeführten Aminoalkohole können allein oder auch in Mischungen eingesetzt werden.

Als Beispiele für die erfindungsgemäßen diprimären Amine seien genannt : Äthylendiamin, 1,3-Diaminopropan, 1,2-Diaminopropan, 1,6-Diaminohexan, 1,9-Diamino-nonan, 1,12-Diaminododecan, Dimerfettsäurediamin, ein Gemisch aus 2,2,4-Trimethylhexamethylendiamin und 2,4,4-Trimethylhexamethylendiamin, Ätherdiamine der allgemeinen Formel

$$H_2N—(CH_2)_n—O—(R—O)_x—(CH_2)_2—NH_2$$

worin n eine Zahl von 3 bis 5 ist, x einen Wert von 0, 1, 2 oder 3 hat und R eine Alkylengruppe mit einer Kettenlänge von 1 bis 12 C-Atomen ist, die auch Alkylsubstituenten mit 1-4 Kohlenstoffatomen tragen kann, wie beispielsweise 1,7-Diamino-4-oxaheptan, 1,11-Diamino-6-oxaundecan, 1,7-Diamino-3,5-dioxaheptan, 1,10-Diamino-4,7-dioxa-5-methyldecan, 1,11-Diamino-4,8-dioxaundecan, 1,11-Diamino-4,8-dioxa-5-äthylundecan, 1,12-Diamino-4,9-dioxadodecan, 1,3-Diamino-4,10-dioxatridecan, 1,4-Diamino-4,11-dioxatetradecan, 1,11-Diamino-4,8-dioxa-5,6-dimethyl-7-propionylundecan, 1,14-Diamino-4,7,10-trioxa-tetradecan, 1,13-Diamino-4,7,10-trioxa-5,8-dimethyltridecan, 1,20-Diamino-4,17-dioxaeicosan und 1,16-Diamino-4,7,10,13-tetraoxahexadecan.

Als Beispiele für die erfindungsgemäßen disekundären Diamine seien Diamine der allgemeinen Formel

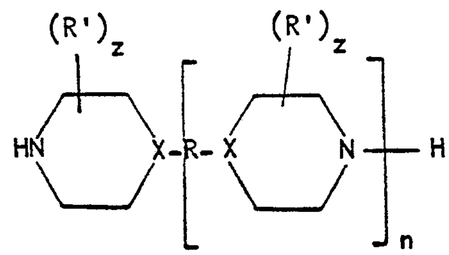

genannt, worin R ein linearer oder verzweigter Alkylrest mit 2 bis 12 C-Atomen und n = 0 oder 1 sein kann, wobei, wenn n = 0 ist, X = N ist, wenn n = 1, X = N oder CH ist und worin R' = $-CH_3$ und z = 0, 1 oder 2 ist.

Amine mit primären und sekundären Amingruppen im Molekül, wie z. B. N-Aminoäthylpiperazin, N-Aminopropylpiperazin, N-Aminopropyldipiperidylpropan, können ebenfalls mitverwendet werden.

Die aufgeführten Diamine können allein oder im Gemisch eingesetzt werden.

Bevorzugt werden diprimäre und disekundäre Amine oder deren Mischungen verwendet.

Das Verhältnis von C : D wird im wesentlichen durch den gewünschten Flexibilitätsgrad der Endprodukte bestimmt und kann zwischen 0,1 : 0,9 bis 0,9 : 0,1 variiert werden. Erfindungsgemäß bevorzugt wird der Bereich zwischen 0,3 : 0,7 bis 0,7 : 0,3.

Mit den erfindungsgemäßen Produkten können sowohl organische als auch anorganische Materialien, wie z. B. Leder, Gummi, Holz, Papier ; Kunststoffe wie z. B. PVC, Polyolefine, Polyester ; Keramik, untereinander oder miteinander verklebt werden.

Produkte mit offenen Zeiten von mehr als 30 Sekunden, gemessen an Noratest ®-Prüfgummi bei Raumtemperatur, werden mit besonderem Erfolg zur Verklebung von Metallen und metallbeschichteten Folien oder metallbeschichteten Papieren verwendet. Der besondere Vorteil ist darin zu sehen, daß die bei der Verwendung der zum Stand der Technik gehörenden Harze bislang noch erforderliche Vorwärmung der Metalle bzw. der metallbeschichteten Substrate bei Verwendung der erfindungsgemäßen Harze nicht mehr erforderlich ist.

Als Metalle kommen die in der Technik gebräuchlichen Eisen und Nichteisenmetalle in Betracht, wie z. B. Aluminium, Eisen, Kupfer, Zink, Zinn oder deren Legierungen. Sofern gewünscht, ist auch die Verklebung von Metallen mit anderen organischen bzw. anorganischen Substraten möglich.

Die Prüfung der offenen Zeit erfolgte nach der folgenden Methode, deren Ergebnisse in der Tabelle aufgeführt sind.

Ein eingespanntes 3 mm starkes Gummistück (Noratest ®-Gummi) mit einer Fläche von 6 $cm^2$ wird mit einem zweiten Gummistück verklebt. Die Klebfuge beträgt dabei 70-80 µm. An dem aufgeklebten Gummistück greift mittels Federzug eine Abzugskraft von 0,067 $N/mm^2$ an. Die offene Zeit ist nun die Zeit, bei der die Abzugskraft nicht mehr in der Lage ist, das obere Gummistück vom unteren abzuziehen. Die Prüfung an Metallen erfolgt nach der gleichen Versuchsanordnung. Die in Tabelle III angeführten Werte wurden an Stahlblechen C 75, gesandstrahlt, gemessen.

Diese Methode hat den Vorteil, daß die offene Zeit an einer praxisgerechten Klebfuge bestimmt wird.

Die in den nachfolgenden Beispielen verwendete dimere Fettsäure hat die folgende Zusammensetzung (nach GLC) :

Beispiele 1, 3-10

| | |
|---|---|
| monomere Fettsäure | 2,7 % |
| dimere Fettsäure | 94,1 % |
| trimere und höher polymere Fettsäure | 3,2 % |

Beispiel 2

| | |
|---|---|
| monomere Fettsäure | 13,6 % |
| dimere Fettsäure | 69,9 % |
| trimere und höherpolymere Fettsäure | 16,5 % |

Beispiel 11

| | |
|---|---|
| monomere Fettsäure | 8,2 % |
| dimere Fettsäure | 82,0 % |
| trimere und höherpolymere Fettsäure | 9,8 % |

Beispiel 1

Ein mit Thermometer, Stickstoffeinlaß, Rührer und Kühler mit Vorlage ausgerüsteter 1 l-Dreihals-

kolben wurde mit 259,9 g destillierter Tallölfettsäure, 13,7 g monomerer Tallölfettsäure und 162,7 g Caprolaktam (Molverhältnis : Fettsäuren : Caprolaktam = 1 : 3) beschickt.

Die Reaktionskomponenten wurden nach Rühren und unter Stickstoff nach 3-maliger Evakuierung des Kolbens und nachfolgendem Brechen des Vakuums mit Stickstoff auf 60 °C erwärmt und 14,45 g Äthylendiamin (0,5 Äquivalente) und 15,02 g Äthanolamin (0,5 Äquivalente) zugesetzt. Das Reaktionsgemisch wurde dann auf 150 °C aufgeheizt und 45 Minuten unter Rückfluß gehalten. Darauf wurde die Temperatur in weiteren 75 Minuten auf 240 °C gesteigert. Diese Temperatur wurde 4 Stunden gehalten. Während der letzten zwei Stunden wurde ein Vakuum von 20 Torr angelegt, um restliches Reaktionswasser und Gleichgewichts-Caprolaktam zu entfernen.

Das fertige Harz zeigte einen Ring- und Ball-Erweichungspunkt von 138 °C und eine Schmelzviskosität von 4,9 Pa·s bei 200 °C.

Die offene Zeit betrug (bei einer Auftragstemperatur des Harzes von 180 °C) an Nora-Testgummi bei Raumtemperatur 90 Sekunden und bei 70 °C 300 Sec.

Die in der als Anlage beigefügten Tabelle aufgeführten Harze wurden in analoger Weise hergestellt.

(Siehe Tabelle I Seite 6 ff.)

Tabelle I

| Beispiel | Dimere Fettsäure | Monomere Fettsäure | Caprolaktam | Mol Caprolaktam (B) pro Mol COOH (A) | Alkanolamin | Diamin | Äquiv. Verh. C : D | Ring + Ball Erweichungspunkt | Schmelzviskosität bei 200 °C |
|---|---|---|---|---|---|---|---|---|---|
| 2 | 359,1 g | - | 71,19 g | 0,5 | 14,20 g Isopropanolamin | 26,55 g Äthylendiamin | 0,3 : 0,7 | 109 °C | 1,8 Pa . s |
| 3 | 259,0 g | 21,00 g Stearinsäure | 166,53 g | 1,5 | 25,95 g Neopentanolamin | 14,79 g Äthylendiamin | 0,5 : 0,5 | 136 °C | 1,1 Pa . s |
| 4 | 202,4 g | 17,60 g Stearinsäure | 218,00 g | 2,5 | 20,27 g Diglykolamin | 11,62 g Äthylendiamin | 0,5 : 0,5 | 173 °C | 1,1 Pa . s |
| 5 | 249,8 g | 20,25 g Stearinsäure | 160,58 g | 1,5 | 14,53 g Äthanolamin | 47,41 g 1,12-Diaminododecan | 0,5 : 0,5 | 134 °C | 1,4 Pa . s |
| 6 | 144,0 g | 16,00 g Stearinsäure | 285,50 g | 4,5 | 13,78 g Äthanolamin | 31,52 g Dimerfettsäurediamin | 0,8 : 0,2 | 193 °C | 5,8 Pa . s |
| 7 | 205,2 g | 22,80 g Stearinsäure | 226,00 g | 2,5 | 12,27 g Äthanolamin | 23,27 g 1,6-Diaminohexan | 0,5 : 0,5 | 178 °C | 4,1 Pa . s |

Tabelle I (Fortsetzung)

| Beispiel | Dimere Fettsäure | Monomere Fettsäure | Caprolaktam | Mol Caprolaktam (B) pro Mol COOH (A) | Alkanolamin | Diamin | Äquiv. Verh. C : D | Ring + Ball Erweichungspunkt | Schmelzviskosität bei 200 °C |
|---|---|---|---|---|---|---|---|---|---|
| 8 | 228,0 g | - | 135,60 g | 1,5 | 12,20 g Äthanolamin | 40,80 g 1,12-Diamino-4,9-dioxadodecan | 0,5 : 0,5 | 142 °C | 3,8 Pa . s |
| 9 | 250,8 g | 34,20 g Stearinsäure | 141,25 g | 1,25 | 12,70 g Äthanolamin | 25,82 g Piperazin | 0,4 : 0,6 | 127 °C | 0,5 Pa . s |
| 10 | 263,6 g | 21,40 g Stearinsäure | 141,25 g | 1,25 | 12,27 g Äthanolamin | 64,18 g Dipiperidylpropan | 0,4 : 0,6 | 130 °C | 1,2 Pa . s |
| 11 | 285,0 g | - | 113,00 g | 1,0 | 15,26 g Äthanolamin | 32,3 g N-Aminoäthylpiperazin | 0,5 : 0,5 | 122 °C | 1,3 Pa . s |

Tabelle II

| Beispiel | Offene Zeit an NORATEST®-Prüfgummi bei Raumtemperatur | bei 70 °C | Auftrags-temperatur der Harze |
|---|---|---|---|
| 2 | 5 sec. | 90 sec | 180 °C |
| 3 | ca. 10 min. | - | 180 °C |
| 4 | ca. 8 min. | ca. 10 min. | 200 °C |
| 5 | ca. 6 min. | ca. 10 min. | 180 °C |
| 6 | 5 sec. | 50 sec. | 220 °C |
| 7 | 7 sec. | 90 sec. | 200 °C |
| 8 | 30 sec. | 120 sec. | 180 °C |
| 9 | ca. 10 min. | - | 180 °C |
| 10 | ca. 10 min. | - | 180 °C |
| 11 | ca. 60 sec. | ca. 3 min. | 180 °C |

Tabelle III

| Beispiel | Abprüfung an Stahlblechen C. 75, gesandstrahlt Offene Zeit bei Raumtemperatur | Zugscherfestigkeit nach DIN 53283 | Auftragstemperatur der Harze |
|---|---|---|---|
| 3 | ca. 1 min | 7,6 N/mm² | 180 °C |
| 5 | ca. 2 - 3 min | 8,5 N/mm² | 180 °C |
| 9 | ca. 3 min | 3,2 N/mm² | 180 °C |
| 10 | ca. 1 min | 4,3 N/mm² | 180 °C |

**Patentansprüche** (für die Vertragsstaaten : BE, DE, FR, GB, IT, LU, NL, SE)

1. Schmelzkleber auf Basis von Polyesteramiden mit niedriger Erstarrungsgeschwindigkeit, erhalten aus

A) dimerisierten Fettsäuren mit 16-44 Kohlenstoffatomen, gegebenenfalls in Mischung mit Monocarbonsäuren, und

B) Caprolaktam und/oder 6-Aminocapronsäure, wobei pro Mol Carboxylgruppen der Komponente A 0,25-5,0 Mol der Komponente B eingesetzt werden, und

C) Monoalkanolaminen der allgemeinen Formel

$$HO—R—NH_2$$

worin R ein aliphatischer, gegebenenfalls verzweigter oder durch Sauerstoffatome unterbrochener, Kohlenwasserstoffrest mit 2-8 Kohlenstoffatomen ist, und

D) diprimären und/oder disekundären und/oder primär-sekundären Diaminen, wobei das Äquivalenzverhältnis von C : D zwischen 0,1 : 0,9 und 0,9 : 0,1 liegt.

2. Schmelzkleber gemäß Anspruch 1, dadurch gekennzeichnet, daß die Komponente C Monoäthanolamin, Isopropanolamin, Neopentanolamin oder Diglykolamin ist.

3. Schmelzkleber gemäß den Ansprüchen 1 und 2, dadurch gekennzeichnet, daß die Komponente D Äthylendiamin, Hexamethylendiamin, Dimerfettsäurediamin, 1,12-Diamino 4,9-dioxa-dodecan oder Piperazin ist.

4. Schmelzkleber gemäß den Ansprüchen 1 bis 3, dadurch gekennzeichnet, daß pro Mol Carboxylgruppen der Komponente A 1-3 Mol der Komponente B eingesetzt werden.

5. Schmelzkleber gemäß den Ansprüchen 1 bis 4, dadurch gekennzeichnet, daß das Äquivalenzverhältnis von C : D zwischen 0,3 : 0,7 und 0,7 : 0,3 liegt.

6. Verwendung von Schmelzklebern gemäß den Ansprüchen 1 bis 5 zur Verklebung von organischen und anorganischen Substraten.

**Patentansprüche** (für den Vertragsstaat AT)

1. Verfahren zur Herstellung von Polyesteramiden mit niedriger Erstarrungsgeschwindigkeit, dadurch gekennzeichnet, daß die Reaktionskomponenten

A) dimerisierte Fettsäuren mit 16-44 Kohlenstoffatomen, gegebenenfalls in Mischung mit monocarbonsäuren, und

B) Caprolaktam und/oder 6-Aminocapronsäure, wobei pro Mol Carboxylgruppen der Komponente A 0,25-5,0 Mol der Komponente B eingesetzt werden, und

C) Monoalkanolamine der allgemeinen Formel

$$HO—R—NH_2$$

worin R ein aliphatischer, gegebenenfalls verzweigter oder durch Sauerstoffatome unterbrochener, Kohlenwasserstoffrest mit 2-8 Kohlenstoffatomen ist, und

D) diprimäre und/oder disekundäre und/oder primär-sekundäre Diamine, wobei das Äquivalenzverhältnis von C : D zwischen 0,1 : 0,9 und 0,9 : 0,1 liegt, unter an sich bekannten Reaktionsbedingungen polykondensiert werden.

2. Verfahren gemäß Anspruch 1, dadurch gekennzeichnet, daß die Komponente C Monoäthanolamin, Isopropanolamin, Neopentanolamin oder Diglykolamin ist.

3. Verfahren gemäß Anspruch 1 und 2, dadurch gekennzeichnet, daß die Komponente D Äthylendiamin, Hexamethylendiamin, Dimerfettsäurediamin, 1,12-Diamino 4,9-dioxa-dodecan oder Piperazin ist.

4. Verfahren gemäß Anspruch 1 bis Anspruch 3, dadurch gekennzeichnet, daß pro Mol Carboxylgruppen der Komponente A 1-3 Mol der Komponente B eingesetzt werden.

5. Verfahren gemäß Anspruch 1 bis Anspruch 4, dadurch gekennzeichnet, daß das Äquivalenzverhältnis von C : D zwischen 0,3 : 0,7 und 0,7 : 0,3 liegt.

6. Verwendung der gemäß Anspruch 1 bis Anspruch 5 hergestellten Kondensationsprodukte als Schmelzkleber zur Verklebung von organischen und anorganischen Substraten.

**Claims** (for the Contracting States : BE, DE, FR, GB, IT, LU, NL, SE)

1. Polyesteramide-based melt adhesive with slow solidification rate, obtained from

A) dimerised fatty acids with 16-44 carbon atoms, optionally in mixture with monocarboxylic acids, and

B) caprolactam and/or 6-aminocaproic acid wherein 0.25-5.0 mol of component B are used per mol of carboxyl groups of component A, and

C) monoalkanolamines of the general formula

$$HO—R—NH_2$$

wherein R is an aliphatic hydrocarbon residue with 2-8 carbon atoms, optionally branched or interrupted by oxygen atoms, and

D) di-primary and/or di-secondary and/or primary-secondary diamines, wherein the equivalence ratio of C : D is between 0.1 : 0.9 and 0.9 : 0.1.

2. Melt adhesive according to claim 1, characterised in that component C is monoethanolamine, isopropanolamine, neopentanolamine or diglycolamine.

3. Melt adhesive according to claims 1 or 2, characterised in that component D is ethylenediamine,

hexamethylenediamine, dimeric fatty acid diamine, 1,12-diamino-4,9-dioxa-dodecane or piperazine.

4. Melt adhesive according to claims 1 to 3, characterised in that 1-3 mol of component B are used per mol of carboxyl groups of component A.

5. Melt adhesive according to claims 1 to 4, characterised in that the equivalence ratio of C : D is between 0.3 : 0.7 and 0.7 : 0.3.

6. Use of melt adhesives according to claims 1 to 5 for the adhesion of organic and inorganic substrates.

**Claims** (for the contracting State AT)

1. Process for the manufacture of polyesteramides with slow solidification rate, characterised in that the reaction components

A) dimerised fatty acids with 16-44 carbon atoms, optionally in mixture with monocarboxylic acids, and

B) caprolactam and/or 6-aminocaproic acid wherein 0.25-5.0 mol of component B are used per mol of carboxyl groups of component A, and

C) monoalkanolamines of the general formula

$$HO—R—NH_2$$

wherein R is an aliphatic hydrocarbon residue with 2-8 carbon atoms, optionally branched or interrupted by oxygen atoms, and

D) di-primary and/or di-secondary and/or primary-secondary diamines, wherein the equivalence ratio of C : D is between 0.1 : 0.9 and 0.9 : 0.1, are condensed under generally-known reaction conditions.

2. Method according to claim 1, characterised in that component C is monoethanolamine, isopropanolamine, neopentanolamine or diglycolamine.

3. Method according to claims 1 or 2, characterised in that component D is ethylenediamine, hexamethylenediamine, dimeric fatty acid diamine, 1,12-diamino-4,9-dioxa-dodecane or piperazine.

4. Method according to claims 1 to 3, characterised in that 1-3 mol of component B are used per mol of carboxyl groups of component A.

5. Method according to claims 1 to 4, characterised in that the equivalence ratio of C : D is between 0.3 : 0.7 and 0.7 : 0.3.

6. Use of the condensation products according to claims 1 to 5 as melt adhesives for the adhesion of organic and inorganic substrates.

**Revendications** (pour les Etats contractants : BE, DE, FR, GB, IT, LU, NL, SE)

1. Colles fusibles à base de polyester-amides ayant une faible vitesse de solidification, colles qui ont été obtenues à partir

A) d'acides gras dimérisés contenant de 16 à 44 atomes de carbone, éventuellement en mélange avec des acides monocarboxyliques,

B) de caprolactame et/ou d'acide amino-6 caproïque, la proportion de la composante B étant de 0,25 à 5,0 mol par mole de radicaux carboxy de la composante A,

C) de mono-alcanolamines répondant à la formule générale

$$HO—R—NH_2$$

dans laquelle R représente un radical hydrocarboné aliphatique contenant de 2 à 8 atomes de carbone, éventuellement ramifié ou interrompu par les atomes d'oxygène, et

D) de diamines diprimaires et/ou disecondaires et/ou primaires-secondaires, le rapport C : D, en équivalents, étant compris entre 0,1 : 0,9 et 0,9 : 0,1.

2. Colles fusibles selon la revendication 1 caractérisée en ce que la composante C est la monoéthanolamine, l'isopropanolamine, la néopentanolamine ou la diglycolamine.

3. Colles fusibles selon l'une des revendications 1 et 2, caractérisées en ce que la composante D est l'éthylènediamine, l'hexaméthylène-diamine, la diamine correspondant à l'acide gras dimère, le diamino-1,12 dioxa-4,9 dodécane ou la pipérazine.

4. Colles fusibles selon l'une quelconque des revendications 1 à 3, caractérisées en ce qu'on a mis en jeu, pour les préparer, de 1 à 3 mol de la composante B par mole de radicaux carboxy de la composante A.

5. Colles fusibles selon l'une quelconque des revendications 1 à 4, caractérisées en ce que le rapport, en équivalents, de la composante C à la composante D est compris entre 0,3 : 0,7 et 0,7 : 0,3.

6. Application de colles fusibles selon l'une quelconque des revendications 1 à 5 pour le collage de supports organiques ou minéraux.

**Revendications** (pour l'Etat contractant AT)

1. Procédé de préparation de polyester-amides à faible vitesse de solidification, procédé caractérisé en ce qu'on polycondense, dans des conditions réactionnelles connues, les composantes réactionnelles suivantes

A) des acides gras dimérisés contenant de 16 à 44 atomes de carbone, éventuellement en mélange avec des acides monocarboxyliques,

B) le caprolactame et/ou l'acide amino-6 caproïque, la proportion de la composante B étant de 0,25 à 0,5 mol par mole de radicaux carboxy de la composante A,

C) des mono-alcanolamines répondant à la formule générale

$$HO—R—NH_2$$

dans laquelle R représente un radical hydrocarboné aliphatique contenant de 2 à 8 atomes de carbone, éventuellement ramifié ou interrompu par les atomes d'oxygène, et

D) des diamines diprimaires et/ou disecondaires et/ou primaires-secondaires, le rapport C : D, en équivalents, étant compris entre 0,1 : 0,9 et 0,9 : 0,1.

2. Procédé selon la revendication 1 caractérisé en ce que la composante C est la mono-éthanolamine, l'isopropanolamine, la néopentanolamine ou la diglycolamine.

3. Procédé selon l'une des revendications 1 et 2, caractérisé en ce que la composante D est l'éthylène-diamine, l'hexaméthylènediamine, la diamine correspondant à l'acide gras dimère, le diamino-1,2 dioxa-4,9 dodécane ou la pipérazine.

4. Procédé selon l'une quelconque des revendications 1 à 3, caractérisé en ce qu'on utilise, par mole de radicaux carboxy de la composante A, de 1 à 3 mol de la composante B.

5. Procédé selon l'une quelconque des revendications 1 à 4, caractérisé en ce que le rapport, en équivalents, de C à D est compris entre 0,3 : 0,7 et 0,7 : 0,3.

6. Application des produits de condensation qui ont été préparés selon l'une quelconque des revendications 1 à 5 comme colles fusibles pour le collage de substrats minéraux ou organiques.